# EUROPEAN PATENT APPLICATION

(11) **EP 1 530 112 A2**
(43) Date of publication of application: **11.05.2005**
(21) Application number: 04012490.1
(22) Date of filing: 26.05.2004
(51) Int. Cl.: G06F 1/00

(54) **Multifunction apparatus and user authentication method**

(30) Priority: 04.11.2003 JP 2003374543
(71) Applicant: MATSUSHITA ELECTRIC INDUSTRIAL CO., LTD., Kadoma-shi, Osaka 571-8501 (JP)
(72) Inventor: Sakamoto, Masakiyo, Tokyo 146-0093 (JP); Ozaki, Minoru, Kawanishi-shi Hyogo 666-0033 (JP); Kitajima, Ikuo, Tokyo 177-0031 (JP); Osanai, Akira, Yokohama-shi Kanagawa 220-0062 (JP); Matsuzawa, Yukari, Tokyo 152-0011 (JP)
(74) Representative: Grünecker, Kinkeldey, Stockmair & Schwanhäusser Anwaltssozietät

(57) **Abstract**

A multifunction apparatus having at least a printer function and a network communication function is provided with an LCD that displays an input screen where an authentication data is input. When a user inputs authentication data on the input screen, the data is transmitted to an authentication server. The authentication server makes a determination as to permitting the use of the multifunction apparatus and the access to the network, by checking a user table that registers user data authorizing the use of the multifunction apparatus and access data indicating whether the access to the network is permitted. Upon receiving the authentication result, the multifunction apparatus makes a determination as to permitting the use of the multifunction apparatus and the access to the network.

## Description

### BACKGROUND OF THE INVENTION

### 1. Field of the Invention

The present invention relates to a multifunction apparatus having a user authentication function. The invention also relates to a user authentication method that authenticates a user using the multifunction apparatus.

### 2. Description of Related Art

A conventional multifunction apparatus allows a user to use the apparatus upon performing user authentication, for the purpose of managing the use and limit the outsider's access to the apparatus. The apparatus pre-registers the authentication information of users to whom the use of the multifunction apparatus is permitted, in order to verify a user's input against the authentication data prior to the use of the apparatus.

The multifunction apparatus is also connected to a LAN or the Internet for the data management and data distribution. Such multifunction apparatus needs to monitor users' access to the network and prevent unauthorized users from accessing the network. Therefore, the access authorization information is pre-registered in the multifunction apparatus, the information being verified upon receiving the user's request to access the network, prior to allowing the network access.

Further, a multifunction apparatus is proposed, in which user registration information (e.g., login name, password, real name, etc.) is managed by a server, while the rights to use the multifunction apparatus are registered by the multifunction apparatus (e.g., Related Art 1).
[Related Art 1] Japanese Patent Laid Open Application 2001-292262

With the above-described conventional multifunction apparatus, there are two separate authentication systems: one for the use of the multifunction apparatus and the other for the access to the network. Therefore, the user must first input authentication data, in the authentication system, to be verified whether the user can use the multifunction apparatus. Upon being confirmed that the user has the right to use the multifunction apparatus, the user must input the authentication data again to be verified whether the user can access the network. Thus, the repeated data input process for the authentication has been inconvenient for the user.

### SUMMARY OF THE INVENTION

The present invention addresses the above-described problem. The purpose of the invention is to provide a multifunction apparatus and a user authentication method that require only one convenient process of inputting the authentication data, to verify authentication for both the use of the multifunction apparatus and the access to the network.

According to the present invention, when authentication data is once input from the input screen of the multifunction apparatus, authentication for both the use of the multifunction apparatus and the access to the network is verified. When the multifunction apparatus receives the authentication result, the determination as to permitting the use of the multifunction apparatus and the access to the network is simultaneously made.

### BRIEF DESCRIPTION OF THE DRAWINGS

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a functional block diagram of a multifunction apparatus according to an embodiment of the present invention;
Fig. 2 is a schematic illustration of the multifunction apparatus of Fig. 1;
Fig. 3 is a plane view of a panel of the multifunction apparatus of Fig. 1;
Fig. 4 is a functional block diagram of an authentication server according to the embodiment of the invention;
Fig. 5 illustrates a configuration of a user table;
Fig. 6 is a flowchart illustrating the embodiment of the invention;
Fig. 7 is a plane view of an input screen of the multifunction apparatus panel;
Fig. 8 (a) is a plane view illustrating a display example of an authentication result when the authentication for the use of the multifunction apparatus has failed;
Fig. 8 (b) is a plane view illustrating a display example of an authentication result when the authentication for both the use of the multifunction apparatus and the access to the network has succeeded; and
Fig. 8 (c) is a plane view illustrating a display example of an authentication result when the authentication for the use of the multifunction apparatus has succeed, but the one for the access to the network has failed.

### DETAILED DESCRIPTION OF PREFERRED EMBODIMENTS

The embodiments of the authentication system, which employs the authentication server and user authentication method, are explained in the following, in reference to the above-described drawings.

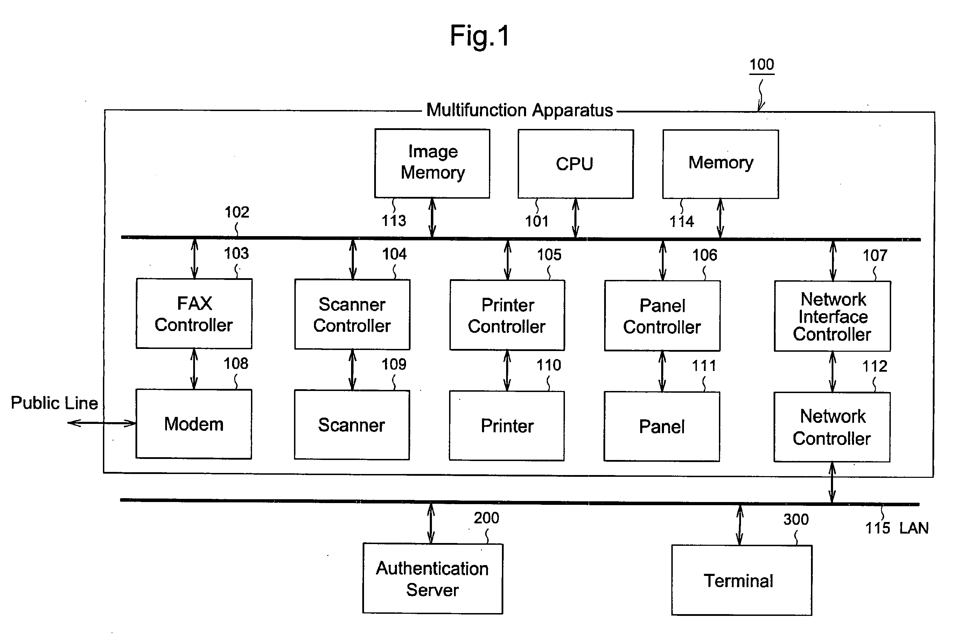

Fig. 1 is a functional block diagram of a multifunction apparatus that is included in an authentication system according to an embodiment of the present invention. Through CPU 101 and via internal bus 102, multifunction apparatus 100 shown in Fig. 1 connects FAX controller 103, scanner controller 104, printer controller 105, panel controller 106, and network interface controller 107. Via modem 108, fax controller 103 exchanges image data from image memory 113, in order to perform facsimile transmission and reception. Scanner controller 104 performs a document scanning process by controlling scanner 109 and stores image data in image memory 113. Printer controller 105 controls printer 110 to print the image data stored in image memory 113. Panel controller 106 retrieves data stored in memory 114 and displays the data on panel 111. Network interface controller 107 controls network controller 112 that exchanges data with authentication server 200 and terminal 300 on network (LAN) 115. CPU 101 transmits an authentication request to authentication server 200 and checks authentication for both the use of the multifunction apparatus and the access to the network, based on a result provided from authentication server 200.

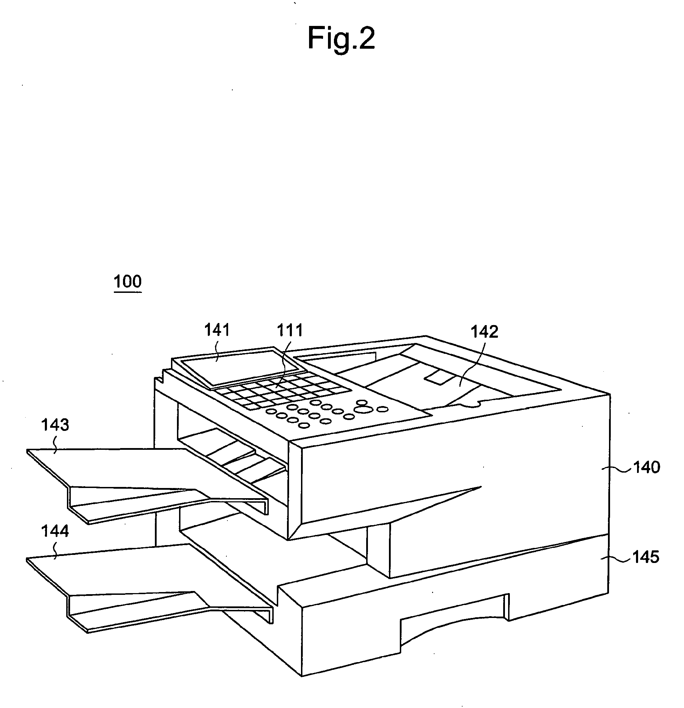

Fig. 2 is a schematic illustration of multifunction apparatus 100. In multifunction apparatus 100, scanner 109 and printer 110 are housed within body 140, together with other components such as CPU 101, memory 114, and modem 108. Panel 111, having LCD 141, is located at the left side of the top surface of multifunction apparatus 100. At the right side of panel 111, document feeder 142 for feeding a document to scanner 109 is located. At the left side surface of multifunction apparatus 100, finisher trays 143 and 144, which receive ejected printed paper from printer 110, are aligned parallel in a approximately horizontal plane. Paper tray 145, which feeds paper to printer 110, is located at the bottom of multifunction apparatus 100.

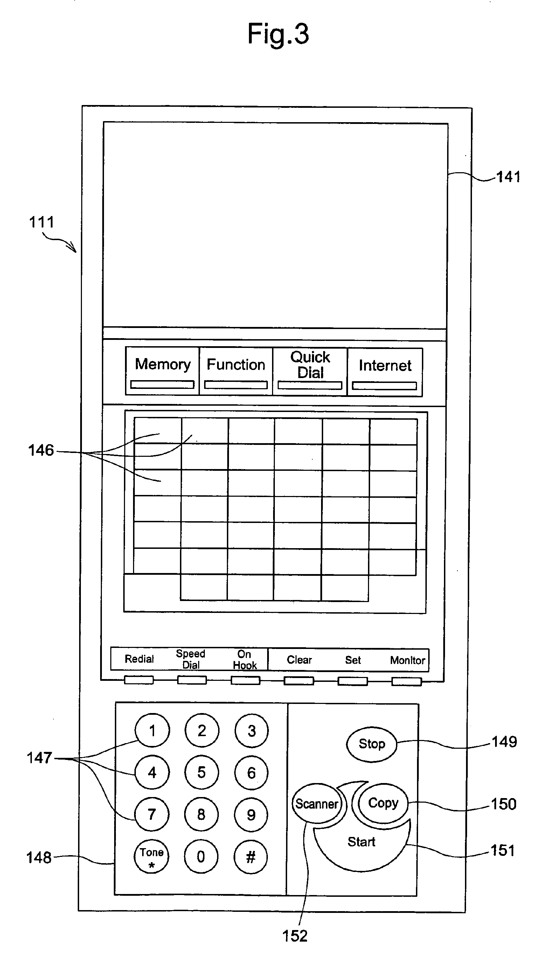

Fig. 3 is a plane view of panel 111 and LCD 141. Lower end of LCD 141 includes a memory button, function button, quick dial button, and Internet button. The Internet button is pressed when an operator needs to switch the mode to the input mode for Internet facsimile communication.

A plurality of one-touch buttons 146 are aligned below the above-described buttons. Below one-touch buttons 146, a redial/pause button, speed dial button, sub-address/on-hook button, clear/monitor volume button, set button, and monitor button are provided. In addition, numeric part 148, providing numeric keys 147, is located further below. Each numeric key 147 has alphabet letters applied to allow the alphabet input. At the right side of numeric part 147, stop button 149, copy button 150, start button 151, and scanner button 152 are provided.

Start button 151 is pressed to start a fax or e-mail transmission process, whereas scanner button 152 is pressed to execute a network scanner operation. In addition, when start button 151 is pressed while LCD 141 has a standby screen, it is considered that a POP3 reception operation is requested. The user inputs authentication data using numeric keys 147.

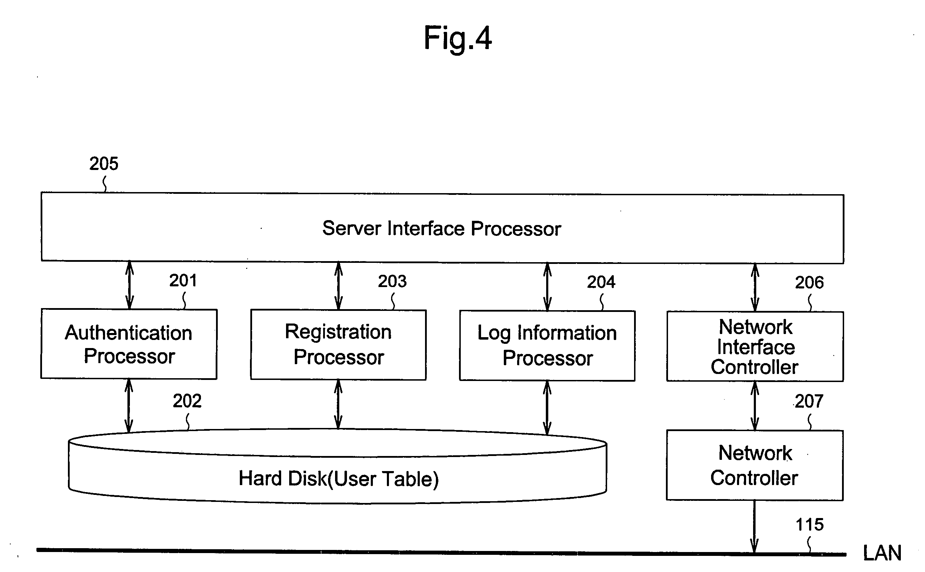

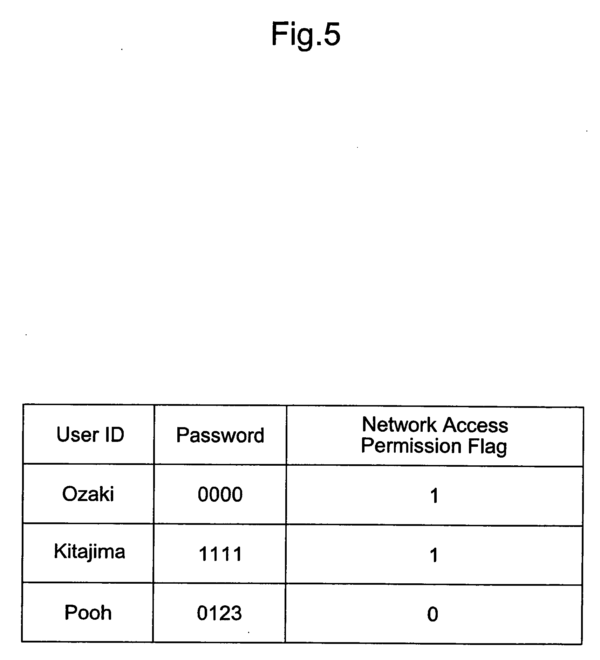

Fig. 4 is a functional block illustrating authentication server 200. Authentication processor 201 simultaneously verifies authentication for the use of multifunction apparatus 100 and for the access to the network, upon receiving an authentication request from multifunction apparatus 100. Hard disk 202 stores a user table by which the authentication for the use of multifunction apparatus 100 and for the access to the network is verified. Fig. 5 shows an example of the configuration of the user table. The user table includes a user ID, password, and network access permission flag. The network access permission flag uses "1" for a user authorized to access the network, and "0" for a user not authorized to access the same.

Registration processor 203 registers, changes, and deletes data in the user table. Log information process 204 collects log information every time an authentication request is made, and stores the information in hard disk 202. The above processors 201, 203, and 204 operate in coordination with server interface processor 205. Based on the processing type of data received from multifunction apparatus 100, server interface processor 205 delivers the data to one of processors 201, 203, or 204, as well as receiving data to be transmitted to multifunction apparatus 100 from one of processors 201, 203, or 204. Server interface processor 205 is connected to LAN 115 via network interface controller 206 and network controller 207.

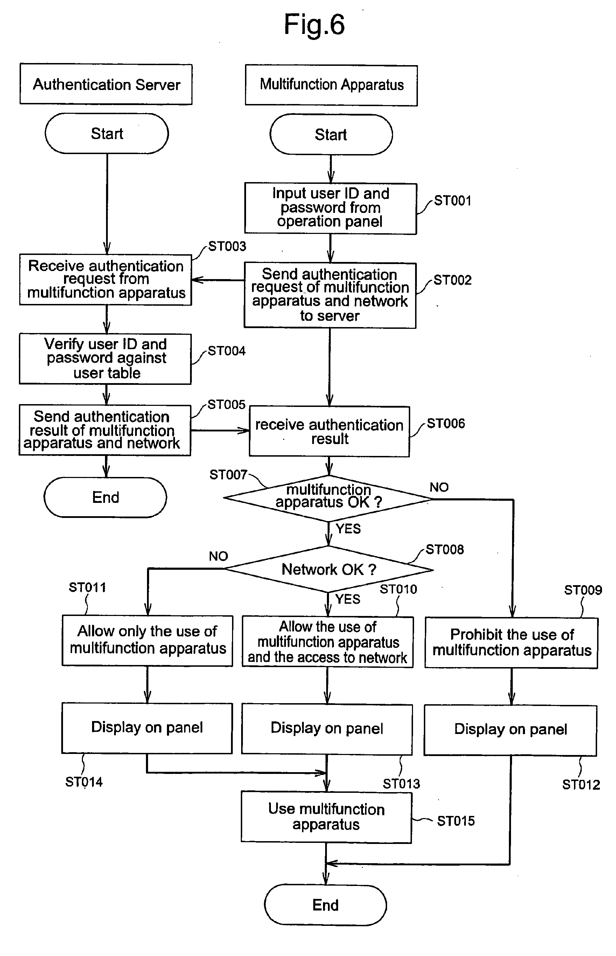

Fig. 6 is provided to illustrate the authentication operation according to the embodiment of the present invention, which has the above-described configuration.

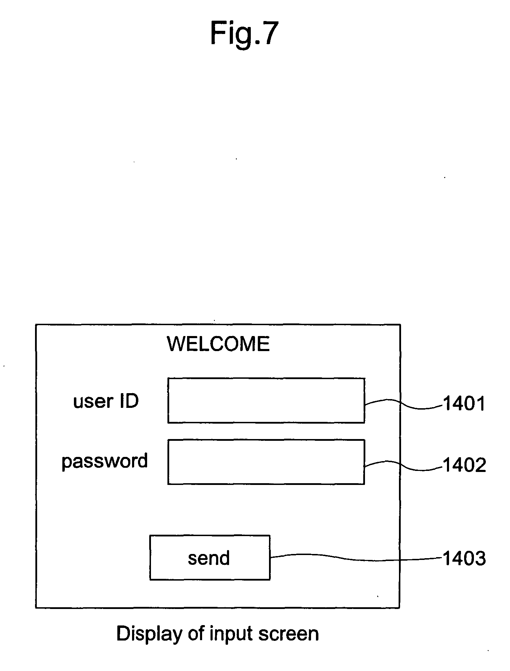

In multifunction apparatus 100, a user ID and a password are input from panel 111, as authentication data (ST 001). Fig. 7 illustrates an example of an input screen displayed on LCD 141 of panel 111. For example, by pressing a function key, the input screen shown in Fig. 7 can be displayed. In this example, the screen data is stored in memory 114. By using numeric keys 147 and the like on panel 111, the user ID is input in user ID input box 1401 of the input screen, and the password is input in password input box 1402. When send button 1403 of the input screen is pressed, the authentication request, to verify the authentication for the use of multifunction apparatus 100 and for the access to the network, is transmitted to authentication server 200 (ST 002). The input user ID and password on the input screen are transmitted at the same time.

Upon receiving the authentication request from multifunction apparatus 100 (ST 003), authentication processor 201 of authentication server 200 verifies the received user ID and password against the registered data in the user table (Fig. 5) (ST 004). The user table pre-registers user IDs and passwords of users who are authorized to use multifunction apparatus 100. In addition, the user table gives a network access permission flag "1" to users who have the authorization to access the network in addition to the authorization to use multifunction apparatus 100. When the user table has the identical combination of the user ID and the password with the received ones, the user is considered to be authorized to use multifunction apparatus 100 and is given the permission to use. In addition, the network access permission flag, registered in the user table, is checked against the user ID. When "1" is registered, the network access is permitted. When "0" is registered, the network access is denied. Authentication processor 201 transmits the authentication for the use of multifunction apparatus 100 and for the access to the network, as the authentication result, to multifunction apparatus 100, which is the original requester of the authentication (ST 005).

Upon receiving the authentication result from authentication server 200 (ST 006), CPU 101 of multifunction apparatus 100 verifies the authentication for the use of multifunction apparatus 100, from the transmitted authentication result (ST 007). When the use of multifunction apparatus 100 is "permitted", the control proceeds to step ST 008. When the use of multifunction apparatus 100 is "denied", the control proceeds to step ST 009.

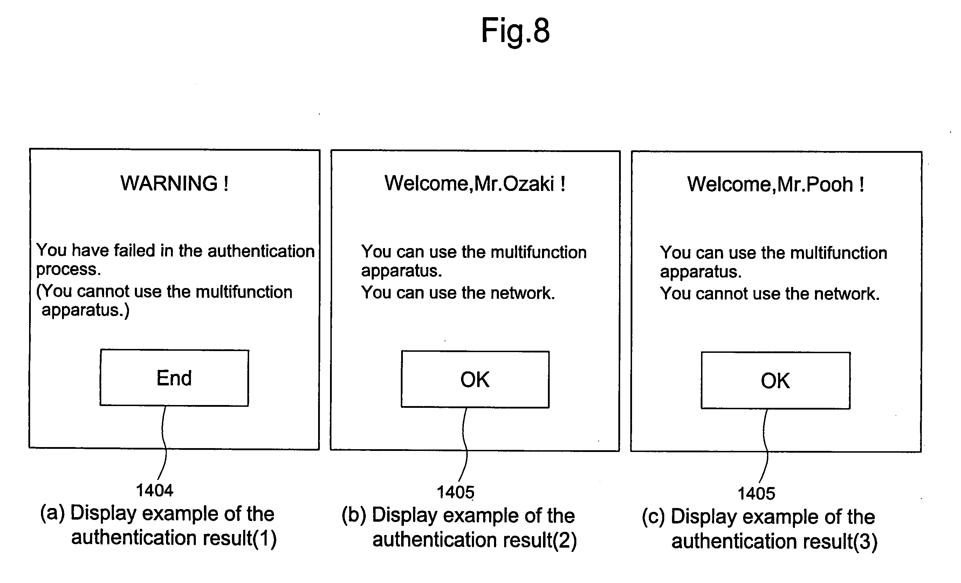

At step ST 009, the user who has just performed the authentication request becomes prohibited from using multifunction apparatus 100 (ST 009). In particular, the operation from panel 111 (excluding the operation for authentication) is no longer accepted. The operation from panel 111 is also rejected at an initial stage where multifunction apparatus 100 is not ready for the use after the power has just been turned on. LCD 141 of panel 111 displays a message indicating that the use of multifunction apparatus 100 is not permitted (ST 012). Fig. 8 (a) shows an example of the displayed message. When end button 1404 is pressed, the authentication process is completed.

When the use of multifunction apparatus 100 is permitted and the control proceeds to step ST 008, the authentication for accessing the network is verified. When the access is "permitted", the control proceeds to step ST 010. When the access is "denied", the control proceeds to step ST 011.

When the control proceeds to step ST 011, the setting for permitting the use of multifunction apparatus 100 but denying the access to the network is provided. Then, the control waits for the next operational input (ST 011). At the same time, LCD 141 of panel 111 displays a message indicating that the use of multifunction apparatus 100 is permitted but the access to the network is denied (ST 014). Fig. 8 (c) shows an example of the displayed message. When OK button 1405 is pressed, the authentication process is completed.

When the network access is permitted and the control proceeds to step ST 010, the setting for permitting the use of multifunction apparatus 100 and the access to the network is provided. The message indicating the same is also displayed on LCD 141 of panel 111 (ST 013). Fig. 8 (b) shows an example of the displayed message. When OK button 1405 is pressed, the authentication process is completed.

Accordingly, the multifunction apparatus 100 is controlled in accordance with the operational input from the user who is authorized to use multifunction apparatus 100 (ST 015).

According the embodiment of the present invention, information that verifies the authentication for the use of multifunction apparatus 100 (user ID and password) and information that verifies the authentication for the access to the network (network access permission flag) are registered in authentication server 200. By performing a single authentication process, it becomes possible to verify the authentication for the use of multifunction apparatus 100 and for the access to the network, thereby enabling the user to conveniently obtain the verification of the same in one operation.

In addition, since the information that verifies the authentication for the use of multifunction apparatus 100 (user ID and password) and information that verifies the authentication for the access to the network (network access permission flag) are registered in authentication server 200, the user table does not need to be stored in multifunction apparatus 100, thereby eliminating the problem of overloading the memory capacity of multifunction apparatus 100.

Furthermore, verifying the authentication for the use of multifunction apparatus 100 and for the access to the network at authentication server 200 helps decrease a load of multifunction apparatus 100 and simplify its software. The load refers to having an authentication protocol for authenticating the user prior to the use of the apparatus. Multifunction apparatus 100 does not need to be provided with such software to execute the authentication protocol.

Additionally, in the embodiment, user IDs and passwords are used for verifying the authentication for the use of multifunction apparatus 100. However, other types of information can be used for the same purpose.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

This application is based on the Japanese Patent Application No. 2003-374543 filed on November 4, 2003, entire content of which is expressly incorporated by reference herein.

## Claims

1. A user authentication method for a multifunction apparatus having at least a printer function and a network communication function, the method comprising:
displaying, on a display, an input screen where authentication data is input;
making an inquiry on whether the multifunction apparatus can be used by a user and whether the network can be accessed by the user, by transmitting authentication data to an authentication server, the authentication data being input by the user from the input screen;
receiving a response to the inquiry from the authentication server; and
determining whether the use of multifunction apparatus and the access to the network are permitted.

2. The user authentication method according to claim 1, wherein when the use of multifunction apparatus is not permitted, a message indicating that the use of multifunction apparatus is not permitted is displayed on a panel of the multifunction apparatus.

3. The user authentication method according to claim 1, wherein when the use of multifunction apparatus is permitted but the access to the network is not permitted, a message indicating that the use of multifunction apparatus is permitted but the access to the network is not permitted is displayed on a panel of the multifunction apparatus.

4. A user authentication method in a server, comprising:
receiving a request to authenticate a user from a multifunction apparatus, the apparatus having at least a printer function and a network communication function;
checking a user table that registers user data authorizing a use of multifunction apparatus and access data indicating whether an access to the network is permitted;
generating a response having an authentication result, the result permitting the use of multifunction apparatus when the user data of the user requesting the authentication is registered in the user table, and permitting the access to the network when the access data indicates that the access is permitted; and
transmitting the response to the multifunction apparatus that has submitted the request.

5. A multifunction apparatus having at least a printer function and a network communication function, the apparatus comprising:
a display that displays an input screen where authentication data is input;
an inquiry unit that makes an inquiry simultaneously on whether the multifunction apparatus can be used by a user and whether the network can be accessed by the user, by transmitting authentication data to an authentication server, the authentication data being input by the user from the input screen;
a receiver that receives a response to the inquiry from the authentication server; and
a determination unit that determines whether the use of the multifunction apparatus and the access to the network are permitted.

6. An authentication server that performs authentication of a user using a multifunction apparatus, the multifunction apparatus having at least a printer function and a network communication function, the server comprising:
a user table that registers user data authorizing a use of the multifunction apparatus and access data indicating whether an access to the network is permitted, wherein
a request to authenticate the user is received from the multifunction apparatus;
a response is generated, the response having an authentication result permitting the use of multifunction apparatus when the user data of the user requesting the authentication is registered in said user table, and permitting the access to the network when the access data indicates that the access is permitted; and
a response is transmitted to the multifunction apparatus that has submitted the request.
